# EUROPEAN PATENT APPLICATION

(11) **EP 4 431 252 A1**
(43) Date of publication of application: **18.09.2024**
(21) Application number: 22892600.2
(22) Date of filing: 26.10.2022
(51) Int. Cl.: B25J 13/00, G05B 19/418

(54) **ROBOT CONTROL DEVICE, ROBOT SYSTEM, AND ROBOT CONTROL METHOD**

(30) Priority: 12.11.2021 JP 2021185278
(71) Applicant: KAWASAKI JUKOGYO KABUSHIKI KAISHA, Kobe-shi, Hyogo 650-8670 (JP)
(72) Inventor: HASUNUMA, Hitoshi, Kobe-shi, 650-8670 (JP); YAMAMOTO, Takeshi, Kobe-shi, 650-8670 (JP); KURASHIMA, Kazuki, Kobe-shi, 650-8670 (JP); KISHIDA, Ayumi, Kobe-shi, 650-8670 (JP); KAMON, Masayuki, Kobe-shi, 650-8670 (JP)
(74) Representative: Müller-Boré & Partner Patentanwälte PartG mbB
(86) International application number: PCT/JP2022/040044
(87) International publication number: WO 2023/085100

(57) **Abstract**

A robot control device includes a trained model and a progress degree acquirer. The trained model is trained on input data and output data for a series of operations to be performed by a robot. The trained model determines into which of multiple process operations corresponding to a result of a division of the series of operations, the input data are classified. In the trained model, an output transition, being a temporal transition of output to realize the process operation, is defined in association with each classification. The progress degree acquirer acquires a progress degree indicating to which degree of progress of the series of operations the output data output by the trained model in response to input of the input data correspond. The progress degree varies depending on an ordinal number of output corresponding to the input data in the output transition associated with the process operation, in a progress degree range corresponding to the process operation that is a result of the classification of the input data performed by the trained model.

## Description

### TECHNICAL FIELD

The present disclosure relates to controlling of a robot by machine learning.

### BACKGROUND ART

A conventional robot control device has been known that includes a machine learning device capable of constructing a model related to a work operation of the robot. PTL 1 discloses a robot control device of this type.

The robot control device of PTL 1 has a trained model that has been constructed by learning work data. A robot is controlled based on the output of the trained model.

The work data include a pair of input data and output data. The input data are states of the robot and its surroundings when a human manipulates the robot to perform a series of operations. The output data are the corresponding human manipulations or operations of the robot due to such manipulations.

In PTL 1, a base trained model is constructed by learning work data for each of a plurality of simple operations. The base trained models are associated with operation labels respectively. Based on a similarity between the trained model and each of the base trained models, a combination of multiple base trained models that represents the trained model is acquired. The operation label corresponding to each of the base trained models representing the trained model are output.

In PTL 1, the trained model operating in the inference phase outputs output data when input data are input. At this time, the trained model can output a progress degree indicating which degree of progress the output data correspond to in the series of operations. As described above, the trained model that has learned the series of operations is represented by a plurality of base trained models. In this case, the relationship between the multiple base trained models in the time series can be acquired based on the progress degree.

### PRIOR-ART DOCUMENTS

### PATENT DOCUMENTS

PTL 1: Japanese Patent Application Laid-Open 2020-104215

### SUMMARY OF THE INVENTION

### PROBLEMS TO BE SOLVED BY THE INVENTION

In the configuration of above PTL 1, the progress degree changes with the base trained model as a unit. Therefore, it is not necessarily suitable for a detailed understanding of the progress, and there was room for improvement in this respect.

The present disclosure was made in view of the above circumstances, and its purpose is to provide a robot control device and the like capable of understanding the progress of operations in detail.

### MEANS FOR SOLVING THE PROBLEMS

The problem to be solved by the present disclosure is as described above, and next, means for solving the problem and effects thereof will be described.

According to the first aspect of the present disclosure, a robot control device with the following configuration is provided. That is, this robot control device includes a trained model, a control data acquirer, a progress degree acquirer, and an information output part. The trained model is constructed by being trained on work data when a human manipulates a robot so that the robot performs a series of operations, the work data including input data and output data, the input data being a state of the robot and its surroundings, the output data being corresponding human manipulation or the operation of the robot by the human manipulation. The control data acquirer acquires control data of the robot to make the robot perform the operations, when the input data concerning the state of the robot and its surroundings are input to the trained model, by acquiring the output data concerning the human manipulation or the operation of the robot predicted accordingly from the trained model. The progress degree acquirer acquires a progress degree, when the input data are input to the trained model and the trained model outputs the corresponding output data, indicating to which degree of progress of the series of operations the output data correspond. The information output part can output the progress degree. The trained model can determine into which of a plurality of process operations, resulting from a division of the series of operations, the input data are classified. In the trained model, an output transition, being a temporal transition of the human manipulation so that the process operation is realized or the operation of the robot by the human manipulation, is defined in association with each classification. The trained model determines output corresponding to the input data from the output transition associated with the classification result of the input data and makes the output the output data. A changing range of the progress degree is divided into a plurality of progress degree ranges to correspond to the plurality of the process operations. An order of the plurality of progress degree ranges corresponds to an order of the plurality of the process operations in the series of operations. The progress degree acquired by the progress degree acquirer varies depending on an ordinal number of output corresponding to the input data in the output transition associated with the process operation, in the progress degree range corresponding to the process operation that is a result of the classification of the input data performed by the trained model.

According to a second aspect of the present disclosure, a robot control method as following is provided. That is, in this robot control method, a trained model is constructed by being trained on work data when a human manipulates a robot so that the robot performs a series of operations, the work data including input data and output data, the input data being a state of the robot and its surroundings, the output data being corresponding human manipulation or the operation of the robot by the human manipulation. Control data of the robot to make the robot perform the operations are acquired, when the input data concerning the state of the robot and its surroundings are input to the trained model, by acquiring the output data concerning the human manipulation or the operation of the robot predicted accordingly from the trained model. When the input data are input to the trained model and the trained model outputs the corresponding output data, a progress degree indicating to which degree of progress of the series of operations the output data correspond is acquired. The progress degree is output. The trained model can determine into which of a plurality of process operations, resulting from a division of the series of operations, the input data are classified. In the trained model, an output transition, being a temporal transition of the human manipulation so that the process operation is realized or the operation of the robot by the human manipulation, is defined in association with each classification. The trained model determines output corresponding to the input data from the output transition associated with the classification result of the input data and makes the output the output data. A changing range of the progress degree is divided into a plurality of progress degree ranges to correspond to the plurality of the process operations. An order of the plurality of progress degree ranges corresponds to an order of the plurality of the process operations in the series of operations. The progress degree acquired by the progress degree acquirer varies depending on an ordinal number of output corresponding to the input data in the output transition associated with the process operation, in the progress degree range corresponding to the process operation that is a result of the classification of the input data performed by the trained model.

This allows the progress degree representing the progress of the series of operations to be acquired in a manner that reflects the detailed progress within a single process operation.

### EFFECTS OF THE INVENTION

According to the present disclosure, when the robot performs the series of operations based on the predictions of the trained model, the user can understand the detailed progress of operations.

### BRIEF DESCRIPTION OF THE DRAWINGS

FIG. 1 is a block diagram showing an electrical configuration of a robot system according to one embodiment of this disclosure.
FIG. 2 is a schematic diagram showing a series of operations to be performed by a robot and process operations that comprise these operations.
FIG. 3 is a schematic diagram showing how state values and user operation forces included in the work data are repeatedly acquired.
FIG. 4 is a schematic diagram showing the process operation data.
FIG. 5 is a diagram showing clustering performed to construct a trained model.
FIG. 6 is a diagram showing an inference performed by the trained model.
FIG. 7 is a graph showing a comparative example where the progress degree changes with the process operation as a unit.
FIG. 8 is a graph showing an example of the change in the progress degree during an autonomous operation of the robot.
FIG. 9 is a graph showing an example of the change in the progress degree when the robot stagnates in the middle of its operation during the autonomous operation.
FIG. 10 is a graph showing an example of the change in the progress degree when the robot performs a hesitation-like operation during the autonomous operation.
FIG. 11 is a diagram showing a modification example of the process operation data.
FIG. 12 is a conceptual diagram comparing the case of learning multiple work data based on time and the case of learning based on the progress degree.

### EMBODIMENT FOR CARRYING OUT THE INVENTION

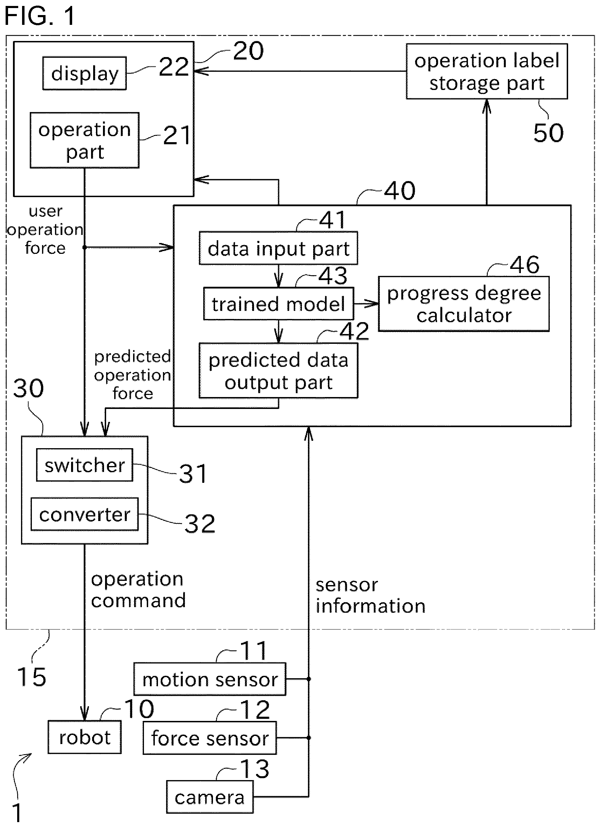

Next, embodiments of the disclosure will be described with reference to the drawings. FIG. 1 is a block diagram showing an electrical configuration of a robot system 1 according to one embodiment of this disclosure.

The robot system 1 shown in FIG. 1 is a system that performs work using a robot 10. The work to be performed by the robot 10 varies, but may be assembly, machining, painting, cleaning, or the like, for example.

As will be described in detail below, the robot 10 is controlled using a model (trained model 43) constructed by machine learning of data. Therefore, the robot system 1 can basically perform the work autonomously without the need for assistance by a user. In addition to performing the work autonomously, the robot 10 can also perform the work in response to user manipulation. In the following description, performing the work autonomously by the robot 10 is referred to as "autonomous operation", and performing the work by the robot 10 in response to user manipulation is referred to as "manual operation".

As shown in FIG. 1, the robot system 1 has the robot 10 and a robot control device 15. The robot 10 and the robot control device 15 are connected to each other by wired or wireless means and can exchange signals.

The robot 10 has an arm mounted to a pedestal. The arm has a plurality of joints, and each joint is equipped with an actuator. The robot 10 moves the arm by operating the actuators in response to operation commands that are input from external.

An end effector selected according to the work is attached to a tip of the arm. The robot 10 can operate the end effector in response to the operation commands that are input from external.

The robot 10 is equipped with sensors to detect the operations of the robot 10 and the surrounding environment, etc. In this embodiment, a motion sensor 11, a force sensor 12, and a camera 13 are attached to the robot 10.

The motion sensor 11 is installed at each joint of the arm of the robot 10 and detects the rotation angle or angular velocity of each joint. The force sensor 12 detects the force received by the robot 10 during the operation of the robot 10. The force sensor 12 may be configured to detect the force applied to the end effector or the force applied to each joint of the arm. The force sensor 12 may be configured to detect moments instead of or in addition to forces. The camera 13 detects the image of a workpiece to be worked on (progress of the work on the workpiece).

The data detected by the motion sensor 11 are operation data indicating the operations of the robot 10. The data detected by the force sensor 12 and the camera 13 are ambient environment data indicating the environment surrounding the robot 10. In the following description, the set of values of the operation data and the ambient environment data acquired at a certain timing may be referred to as state values. The state values indicate the state of the robot 10 and its surroundings.

In the following description, the motion sensor 11, the force sensor 12, and the camera 13 which are attached to the robot 10 may be collectively referred to as "state detection sensors 11-13". The set of values detected by the state detection sensors 11-13 at a certain timing corresponds to the state values. The state detection sensors 11-13 may be installed around the robot 10 instead of being attached to the robot 10.

The robot control device 15 has a user interface 20, an operation switcher (control data acquirer) 30, an AI part 40, and an operation label storage part 50.

Specifically, the robot control device 15 is a computer with a CPU, a ROM, a RAM, and an HDD. The computer is equipped with a mouse and other devices for user operation. The computer is preferably equipped with a GPU, which may allow the machine learning described below to be performed in a shorter time. The HDD stores programs for operating the robot control device 15. By cooperation of the above hardware and software, the robot control device 15 can function as the user interface 20, the operation switcher 30, the AI part 40, and the operation label storage part 50.

The user interface 20 realizes the user interface function of the robot control device 15. The user interface 20 has an operation part 21 and a display (information output part) 22.

The operation part 21 is a device used to manually operate the robot 10. The operation part 21 can be configured with, for example, a lever, pedal, or the like.

Although not shown in the figure, the operation part 21 is equipped with a known operation force detection sensor. The operation force detection sensor detects a force (operation force) applied to the operation part 21 by the user.

In the case where the operation part 21 is configured to be able to be moved in various directions, the operation force may be a value including the direction and magnitude of the force, for example, a vector. The operation force may be detected not only in the form of a force (N) applied by the user, but also in the form of acceleration, which is a value linked to the force (i.e., the force applied by the user divided by a mass of the operation part 21).

In the following description, the operating force applied by the user to the operation part 21 may be specifically referred to as "user operation force". The user operation force output by the user manipulating the operation part 21 is converted into the operation command by the operation switcher 30 as described below.

The display 22 can display various information in response to user instructions. The display 22 can be, for example, a liquid crystal display. The display 22 is positioned near the operation part 21. If the operation part 21 is located away from the robot 10, the display 22 can display images of the robot 10 and its surroundings.

The robot 10, the operation part 21, and the AI part 40 are connected to the operation switcher 30. The user operation force output by the operation part 21 and a predicted operation force described below output by the AI part 40 are input to the operation switcher 30.

The operation switcher 30 outputs an operation command to the robot 10 to operate the robot 10. The operation switcher 30 has a switcher 31 and a converter 32.

The switcher 31 is configured to output one of the input user operation force and the predicted operation force to the converter 32. Based on a selection signal indicating which of the user operation force and the predicted operation force to convert, the switcher 31 outputs the user operation force or the predicted operation force to the converter 32. The selection signal is output from the user interface 20 to the operation switcher 30, by the user manipulating the user interface 20 as appropriate.

This allows the user to switch between a state in which the robot 10 is operated by the user (manual operation) and a state in which the robot system 1 allows the robot 10 to perform the work autonomously (autonomous operation). In the case of the manual operation, the robot 10 operates based on the user operation force output by the operation part 21. In the case of the autonomous operation, the robot 10 operates based on the predicted operation force output by the AI part 40.

The converter 32 converts either the user operation force or the predicted operation force input from the switcher 31 into the operation command to operate the robot 10 and outputs it to the robot 10. The operation command can be rephrased as control data for controlling the robot 10.

The AI part 40 has a trained model 43, a data input part 41, a predicted data output part 42, and a progress degree calculator (progress degree acquirer) 46.

The trained model 43 is constructed to make the robot 10 perform a series of operations by the autonomous operation. The format of the trained model 43 used in the AI part 40 is arbitrary, for example, a model based on clustering can be used. The construction of the trained model 43 may be performed in the robot control device 15 or on another computer.

The data input part 41 functions as an interface on an input side of the AI part 40. Sensor information output from the state detection sensors 11-13 is input to the data input part 41.

The predicted data output part 42 functions as an interface on an output side of the AI part 40. The predicted data output part 42 can output the data output by the trained model 43.

The progress degree calculator 46 computes how much progress the output of the trained model 43 corresponds to in the series of operations. The details of the process performed by the progress degree calculator 46 will be described later.

In this embodiment, the AI part 40 builds the trained model 43 by learning the manipulation of the robot 10 performed by the user by the operation part 21. Specifically, the state values acquired by the state detection sensors 11-13 and the user operation force acquired by the operation force detection sensor are input to the AI part 40.

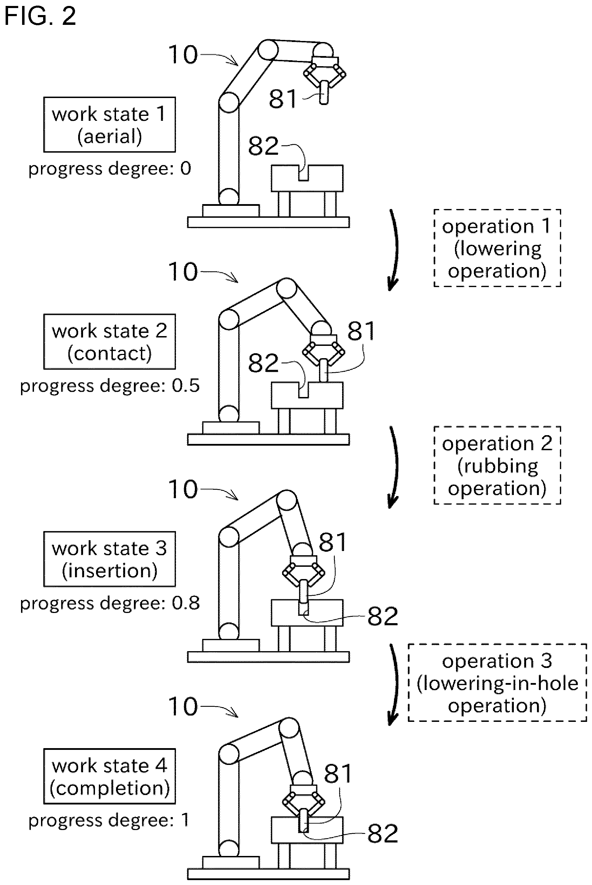

The series of operations to be performed by the autonomous operation of the robot 10 will now be described with reference to FIG. 2.

As shown in FIG. 2, consider the case where the robot 10 is made to perform a series of operations to place the workpiece 81 into the recess 82. From the start to the end of this series of operations, four work states can be considered to appear: aerial, contact, insertion, and completion.

Work state 1 (aerial) is a state in which the robot 10 holds the workpiece 81 and positions it above the recess 82. Work state 2 (contact) is a state in which the robot 10 holds the workpiece 81 and brings it into contact with the surface in which the recess 82 is formed. Work state 3 (insertion) is a state in which the robot 10 holds the workpiece 81 and slightly inserts into the recess 82. Work state 4 (completion) is a state in which the workpiece 81 held by the robot 10 is fully inserted into the recess 82.

Each of the four work states corresponds to any of the start, intermediate, and end states of the series of operations by the robot 10. The series of operations by the robot 10 is divided into multiple processes with the work state as a boundary. As the robot 10 performs operations respectively corresponding to the processes, the work state transitions in the following order: the work state 1 (aerial), the work state 2 (contact), the work state 3 (insertion), and the work state 4 (completion).

Hereafter, the operation corresponding to each process into which the series of operations is divided with the work state as a boundary may be referred to as process operation. In the example shown in FIG. 2, the process operations are operation 1 (lowering operation), operation 2 (rubbing operation), and operation 3 (lowering-in-hole operation). By repeating the process operations, the operation is invoked that naturally transition to the next work. For example, if the operation 1 (lowering operation) is performed in the work state 1 (in the air), the transition is made to the work state 2 (contact). The same is true for the operations 2 and 3.

The four work states are registered in advance by the user to the AI part 40 when the series of work are to be learned by the AI part 40.

At this time, the user sets a numerical value of a progress degree for each work state. The progress degree is a parameter used to evaluate which degree of progress in the series of operations corresponds to the operation performed by the robot 10 based on the output of the trained model 43. In this embodiment, the progress degree takes values ranging from 0 to 1, with values closer to 1 indicating that the more progress has been made in the series of operations. The range over which the progress degree varies is arbitrary and can be defined to range from 0 to 100, for example.

The value of the progress degree is predetermined for each work state so that it increases monotonically according to the appearance order of the work states. The value of progress degree may be determined by the user or by the AI part 40 automatically.

In the following, it will be assumed that the progress degree is determined to be 0 for the work state 1 (aerial), 0.5 for the work state 2 (contact), 0.8 for the work state 3 (insertion), and 1 for the work state 4 (completion), respectively. This necessarily means that progress degree ranges of 0 to 0.5, 0.5 to 0.8, and 0.8 to 1 are assigned to the operation 1 (lowering operation), the operation 2 (rubbing operation), and the operation 3 (lowering-in-hole operation), respectively.

The data for machine learning can be acquired by the user actually manipulating the operation part 21 to make the robot 10 perform the series of operations. Hereafter, the data acquired by having the robot 10 perform the series of operations shown in FIG. 2 one time may be referred to as work data.

During the process of having the robot 10 perform the series of operations by manipulating the operation part 21, the user instructs the AI part 40 in real time, at the timing when the situation becomes the respective work state, that the work state has changed. The instruction can be given, for example, by the user vocalizing a specific word into a microphone. The operation between the timings respectively when the work state change is instructed by the user is handled as one process operation.

The instruction does not have to be given in real time. For example, after the work data have been acquired, the user can specify later, while viewing the data, at what point the work state has switched.

In the series of operations, between multiple timings at which the switching of the work state is instructed by the user corresponds to one process operation. Therefore, each process operation is substantially specified by manual operation by the user (manual specification mode). However, it is also possible to automatically recognize the process operations that constitute the series of operations (automatic specification mode).

Generally, the manner in which the user applies force to the operation part 21 differs as the process operation is switched. The AI part 40 detects that the switching of process operation has occurred based on, for example, this change in the manner in which force is applied. This enables the automatic specification mode. The switching of process operation can also be detected using known machine learning (for example, supervised learning).

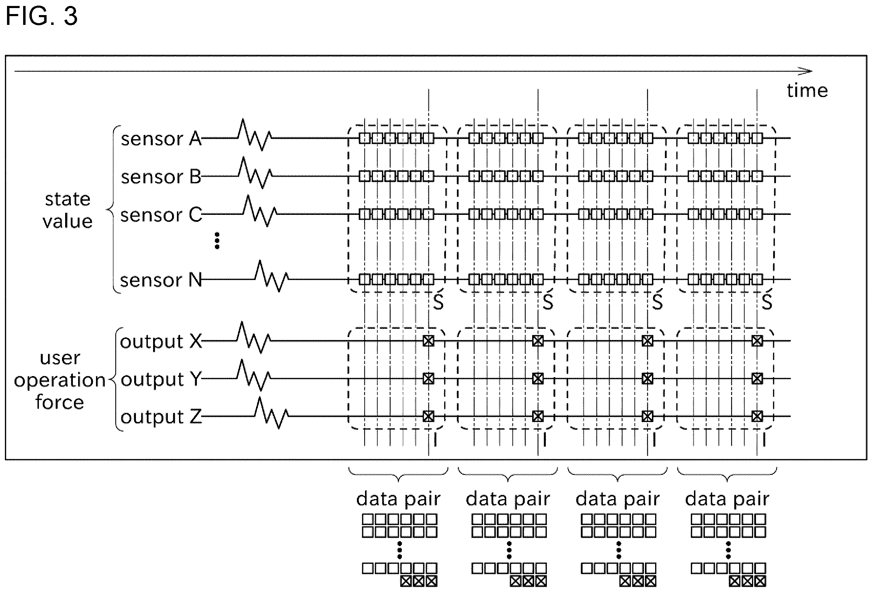

FIG. 3 schematically shows how work data for learning are acquired from various sensors when the user manipulates the robot 10 to perform the series of operations. The data are repeatedly acquired from the state detection sensors 11-13 and the operation force detection sensors at appropriate time intervals. In this embodiment, the data acquisition cycle is defined as 1 second, but can be changed as appropriate.

A data pair comprises the state values and the user operation force acquired at a certain timing. FIG. 3 shows an example where the time interval of data acquisition for the operation force detection sensor is equal to the data acquisition cycle, while the time interval of data acquisition for the state detection sensors 11-13 is shorter than the data acquisition cycle. With respect to the state values, in the example in FIG. 3, one data pair includes the transition from one previous data acquisition timing to the current data acquisition timing over a short period of time. Thus, one data pair may include the time transition of at least any of the state value and the user operation force.

The data pair is acquired both when the robot 10 is in any of the work states and when the robot 10 is performing any of the process operations. The work data includes a plurality of data pairs, each of which is associated with the time at which the data pair was acquired.

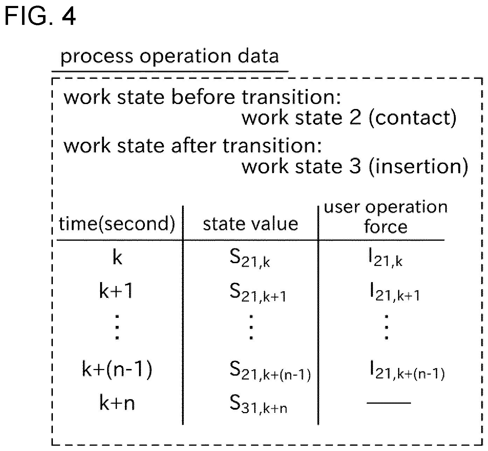

Next, the process operation data which is a division of the work data will be described. FIG. 4 shows an example of the data used to construct the trained model 43.

The data in FIG. 4 show that when k seconds have elapsed since the start of the series of operations, the work state was the work state 2 (contact) and the state value was S_{21,k}, and as a result of the robot 10 operating for n seconds, the work state has transitioned to the work state 3 (insertion) and the state value is S_{31,k+n}. Here, n is an integer greater than or equal to 1. The data in FIG. 4 correspond to a process operation that is part of the series of work described above, specifically, the operation 2 (rubbing operation) described above. Hereafter, the data corresponding to one process operation may be referred to as process operation data.

In the AI part 40, the machine learning model learns the process operation data shown in FIG. 4 as a unit. One process operation data is a set of the following (1) to (4).
(1) Data indicating that the work state before the transition is the work state 2 (contact).
(2) Data indicating that the work state at the destination of the transition is the work state 3 (insertion).
(3) Data indicating the state value S_{21,m} and the user operation force I_{21,m} at m seconds after the start of the series of operations in the process of the work state transition. Here, when the time from the start of the series of operations to the start of the relevant process operation is k seconds, m is an integer satisfying k ≤ m < k+n. The data corresponds to a plurality of data pairs consisting of the state values S₂₁ and the user operation force values I₂₁, each associated with a value of m.
(4) Data of the state value S_{31,k+n} at n seconds after the start of the transition, as a result of the completion of the work state transition.

The above set of (1) to (4) can be acquired by processing in the AI part 40 to extract a part from the work data corresponding to the series of operations.

Since there are variations in user manipulation and situations, there are many variations in the operation 2 (rubbing operation) as a process operation. For example, there may be a case where the current work state is the work state 2 (contact) and the current state value is S_{22,k}, and the state value is S_{32,k+n} when the transition is made to the work state 3 (insertion). The machine learning model also learns the process operation data in the same way as described above.

The series of operations includes not only transitions from the work state 2 (contact) to the work state 3 (insertion), but also transitions between other work states, for example, from the work state 1 (aerial) to the work state 2 (contact). In other words, the series of operations includes not only the operation 2 (rubbing operation) but also other process operations. The machine learning model also learns in the same way as above for the process operations corresponding to those transitions.

The user repeatedly manipulates the operation part 21 to have the robot 10 perform the same series of operations repeatedly. This provides multiple work data, and the machine learning model can learn variations for each process operation.

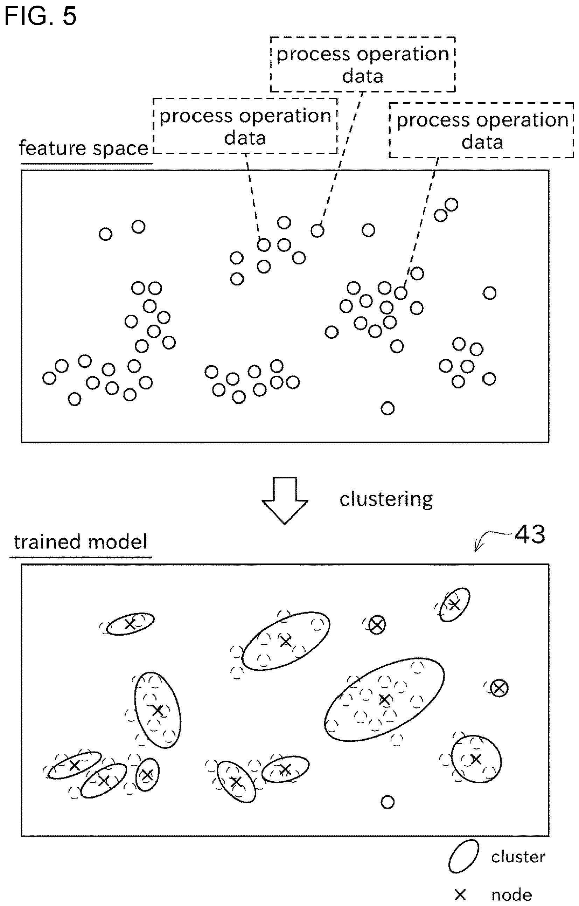

In this embodiment, a machine learning model using clustering is applied. The machine learning model learns one process operation data, which means that it learns one feature vector corresponding to the set of (1) to (4) above, described with reference to FIG. 4. In this embodiment of the machine learning model, a map with a multi-dimensional feature space is defined. The AI part 40 plots one feature vector in the feature space of the machine learning model for each process operation it learns. The upper side of FIG. 5 conceptually shows a feature vector corresponding to the process operation data plotted in the feature space.

After all feature vectors to be learned are input to the AI part 40, clustering is performed on the multiple feature vectors plotted in the feature space.

Clustering is a method of learning the laws of distribution from a large number of data to obtain a plurality of clusters, which are clusters of data that are similar in characteristics to each other. Here, the data means the feature vector. For example, known non-hierarchical clustering methods can be used as appropriate. As a result, a plurality of clusters are acquired by grouping together feature vectors that are similar to each other. The number of clusters in clustering can be determined as appropriate. If there are two feature vectors that have different combinations of the work state at a certain point in time and the work state of the transition destination, the clustering is preferably performed so that the two feature vectors belong respectively to clusters that are different from each other.

The AI part 40 then acquires by computation, in each cluster, a feature vector that is representative of that cluster (in other words, the process operation data). Hereafter, this representative feature vector may be referred to as node. The node can be acquired in various ways and, for example, can be the data corresponding to a center of gravity of each cluster. The nodes are indicated by X marks in the lower side of FIG. 5.

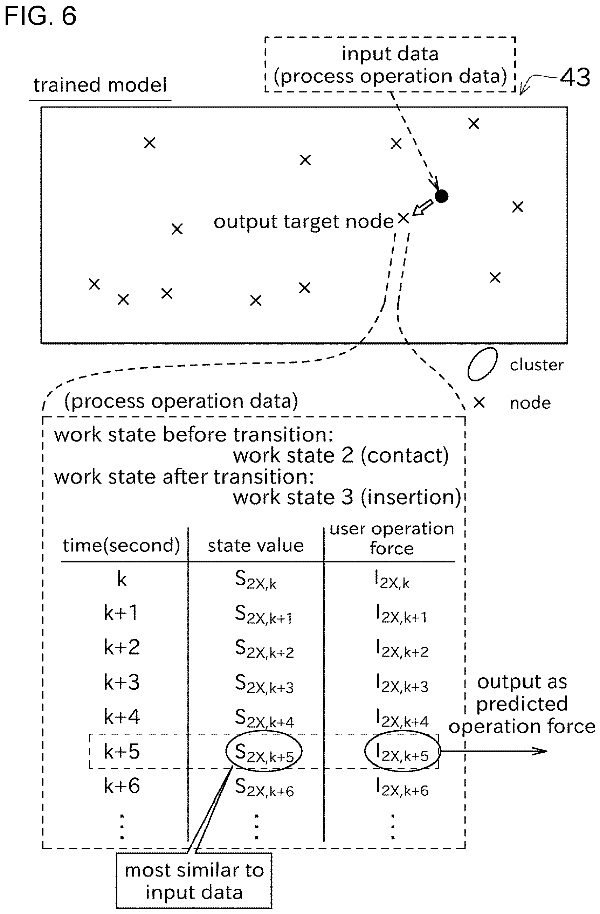

By the above, the training phase is complete and the trained model 43 can be constructed. The trained model 43 constructed by the AI part 40 is, in effect, a distribution of the nodes in the multi-dimensional feature space, as schematically shown in FIG. 6.

Next, the output from the AI part 40 based on the trained model 43 will be described.

In the inference phase, a feature vector is generated in the AI part 40 that includes the state values acquired by the state detection sensors 11-13 at the present time and the current work state. This single feature vector is input to the trained model 43. Hereafter, this feature vector may be referred to as input feature vector. The input feature vector may further include the most recent past transition regarding the state values and the most recent past transition regarding the user operation force.

The trained model 43 determines one or more nodes that are similar to the input feature vector. The input feature vector does not contain information about the current operating force since the current operating force is the subject of inference. Therefore, when computing the similarity between the input feature vector and the nodes, the dimensions related to the current operating force are ignored. The similarity can be calculated using a known formula (for example, Euclidean distance). Hereafter, the determined node may be referred to as the output target node. Acquiring the output target node is synonymous with determining the classification result for which cluster the input feature vector is classified by the clustering.

Once the output target node has been acquired, the trained model 43 further determines at which time the current state values in the input feature vector are most similar to the state values in the above (3) transition included in the output target node. The similarity can be computed by known methods (for example, Euclidean distance) as above. In this case, not only the similarity of state values, but also the similarity of time is taken into account.

The example in FIG. 6 shows the case where the state value S_{2X,5} at the 5th second is the most similar to the state value of the input feature vector. Once the most similar state value is determined, the trained model 43 outputs the user operation force that belongs to the same data pair as the state value in the above (3) transition, as the predicted operation force described above. In the example in FIG. 6, the user operation force I_{2X,5} associated with the state value S_{2X,5} is output as the predicted operation force.

If, at the output target node, the predicted operation force corresponds to the last user operation force of the (3) transition, the AI part 40 updates the current work state to the transition destination work state.

By repeating the above process every second, for example, and operating the robot 10 based on the predicted operation force, the autonomous operation of the robot 10 can be achieved.

Next, the above process of the progress degree calculator 46 will be described.

The progress degree calculator 46 can acquire, by computing, a progress degree indicating which degree of progress in the series of operations the predicted operation force output by the trained model 43 corresponds to. This progress degree can be computed based on the progress degree value corresponding to the work state before the transition indicated by the output target node, the progress degree value corresponding to the work state after the transition, and information of the chronological order of the predicted operation force at the output target node.

The following is a specific description. The output target node determined by the trained model 43 as similar to the feature vector input to the AI part 40 includes the above (1) to (4) as information. In the present example, the output target node contains, as shown in the lower part of FIG. 6, information that the work state before the transition is the work state 2 (contact), information that the work state after the transition is the work state 3 (insertion), the state values S_{2X,k} to S_{2X,k+14} for 15 seconds for the transition between these work states, and the user operation forces I_{2X,k} to I_{2X,k+14} for the 15 seconds. Suppose further that the state value S_{2X,k+5} of the 5th second of the node is the most similar to the current state value included in the input feature vector. In this case, the AI part 40 outputs the user operation force I_{2X,k+5} as the predicted operation force. It is also possible to omit the conditions regarding the work state before the transition and the work state after the transition, and select the node that is most similar to the current state value from the entire nodes and output it as the predicted operation force.

As described above, 0.5 is defined as the progress degree for the work state 2 (contact) and 0.8 is defined as the progress degree for the work state 3 (insertion). In the above node, since the state at the 5th second from the start of the process operation can be considered, in terms of time, 5/15 of the progress degree interval from 0.5 to 0.8 has been completed, so this state can be calculated to correspond to a progression of 0.6. As stated above, the progress degree calculator 46 performs the calculation to convert time to the progress degree. The AI part 40 outputs the acquired progress degree value, 0.6, to a display or the like. The configuration is possible that the above calculations are performed in advance to create a conversion table and the conversion from time to the progress degree is performed using this table.

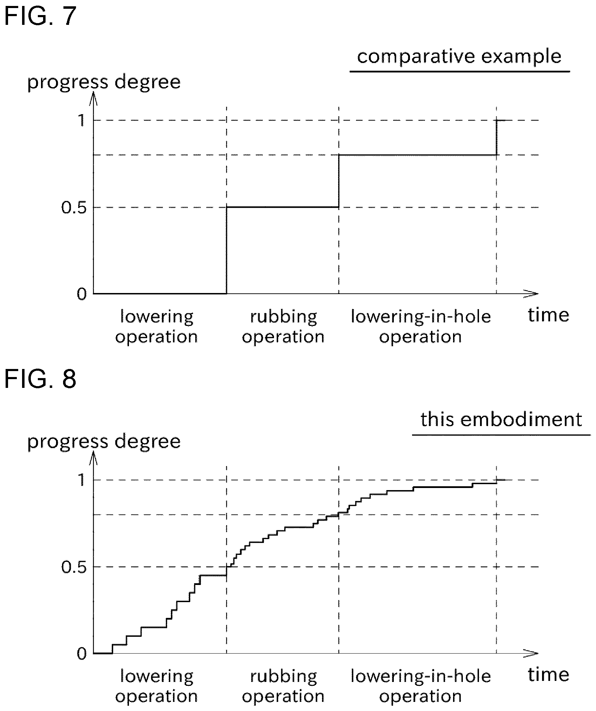

Suppose that the progress degree is determined only according to the order of the work states. In this case, as shown in the comparative example graph in FIG. 7, even if the robot 10 has started the series of operations from the work state 1 (aerial), the progress degree remains 0 until just before the transition to the work state 2 (contact) is completed. At the timing when the transition to the work state 2 (contact) is completed, the progress degree changes discontinuously to 0.5. Thereafter, the progress degree remains 0.5 until just before the completion of the transition to the work state 3 (insertion). At the timing when the transition to the work state 3 (insertion) is completed, the progress degree changes discontinuously to 0.8. Thereafter, the progress degree remains 0.8 until just before the completion of the transition to the work state 4 (completion). At the timing when the transition to the work state 4 (completion) is completed, the progress degree changes discontinuously to 1.0.

Thus, if the progress degree is varied in units of the work states (in other words, in units of the cluster), the change in the progress degree is coarse-grained. Thus, while there is no problem in understanding progress at a large granularity, it is difficult to understand detailed progress.

In particular, the process operation may include situations in which similar states continue for a relatively long period of time, such as work in which the workpiece is held at the tip of the robot 10 and is continuously moved through the air, or work in which the held workpiece is continuously pushed against another component. In such cases, the transition of the progress degree could be no different than if the work had been stagnant for a long time.

In this respect, in this embodiment, the progress degree is acquired in a manner that not only reflects the change in the work state, but also reflects the order in which the predicted operation force corresponds in the chronological callout of the user operation force in the output target node. Thus, the progress degree increases in a relatively smooth manner as the series of operations progress, as shown in FIG. 8, allowing the user to easily understand the detailed progress of the work.

When the robot 10 operates autonomously, the degree of progress is displayed on the display 22, for example, in real time. It is preferable to display the progress in the form of a graph, for example, as shown in FIG. 8, so that the user can intuitively understand the progress. If the autonomous operation by the trained model 43 in the inference phase is performed without problems, the progress degree changes in a fine staircase from 0 to 1. The unit in which the progress degree changes is the progress degree corresponding to one second that is the data acquisition cycle described above. The data acquisition cycle can also be rephrased as the output cycle of the predicted operation force.

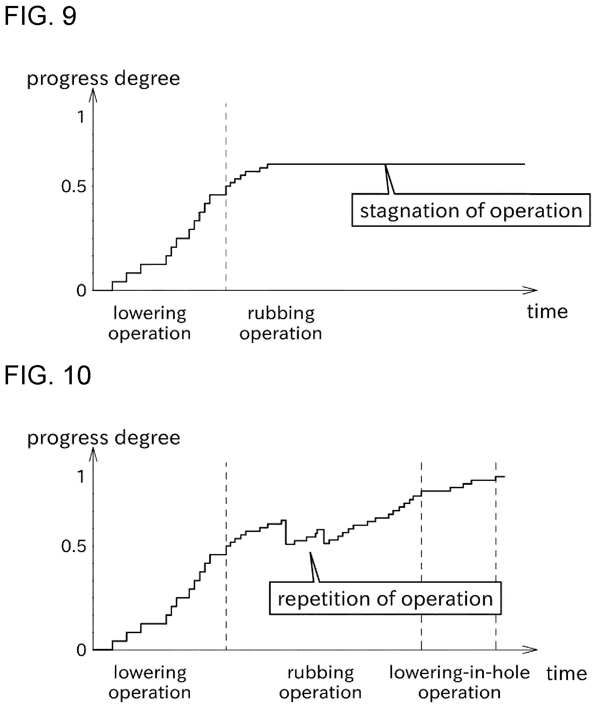

If the robot 10 stops in the middle of any process operation, the value of the progress degree stops increasing from the value corresponding to the middle of that process operation (for example, 0.6), as shown in FIG. 9. If some hesitation-like or trial- and-error-like behavior occurs in the autonomous operation of the robot 10, the value of the progress degree may repeatedly move up and down between 0.55 and 0.7, for example, as shown in FIG. 10. Thus, by monitoring the finely fluctuating of the progress degree, it is easy to understand that an unexpected situation is occurring in the autonomous behavior of the robot 10.

As shown in FIGS. 8 through 10, in addition to the graph, the operation labels stored by the operation label storage part 50 described above may be displayed by the display 22. This allows the user to intuitively understand which process operation is being performed.

Generally, the behavior of the machine learning model could not be understood from the outside, and it was unclear which of the process operations it was assuming. Therefore, it was difficult to evaluate whether the machine learning model is performing the operations in the correct order without misunderstanding, or in the case of failure, which operation failed. However, in this embodiment, as shown in FIGS. 8 through 10, the detailed order of the operations performed in the series of operations is visualized. Therefore, it becomes easier to correctly evaluate the performance, etc. of the constructed trained model 43, and furthermore, clues for improving the model can be easily obtained.

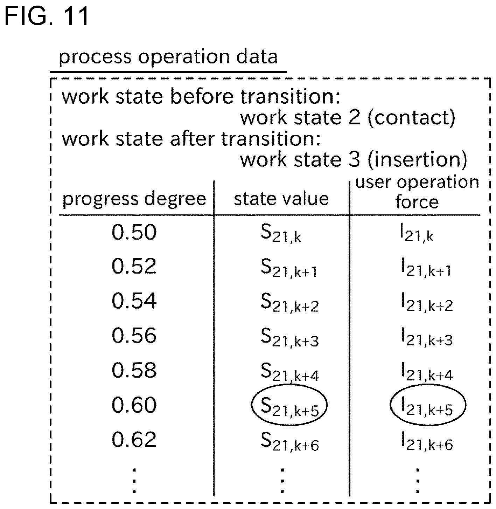

Next, with reference to FIG. 11, a modification example of the process operation data will be described.

In the process operation data of the above embodiment, as shown in FIG. 4, a data pair comprising the state value S₂₁ and the user operation force I₂₁ is associated with a time m based on when the series of operations is started. Instead, in this modification example, the data pair is related to the progress degree, as shown in FIG. 11.

Since the progress degree is a ratio of the progress of the series of operations, using the progress degree instead of the time can suppress the effect of variations in the length of the work data.

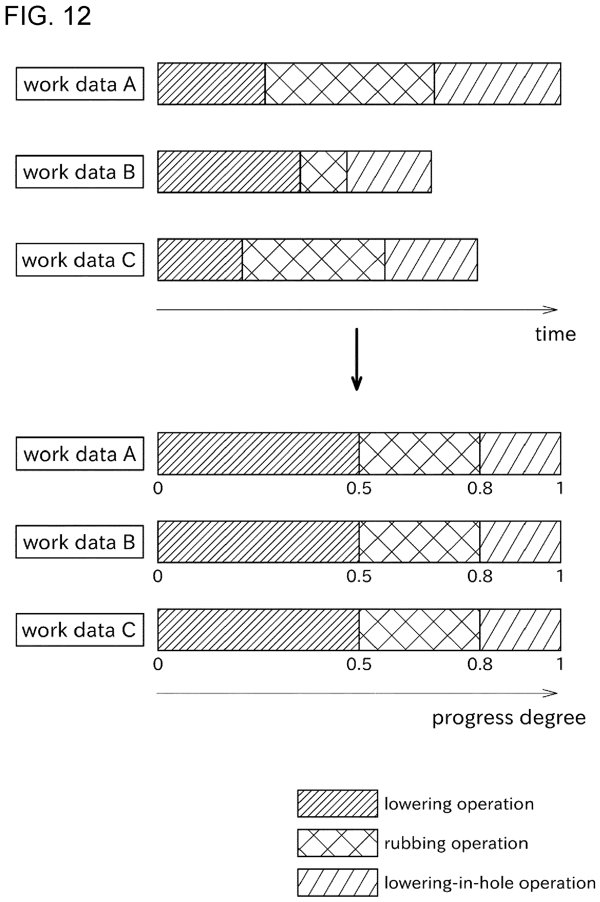

For example, consider the case where the machine learning model is trained on the three work data shown in the upper part of FIG. 12 in order to construct the trained model 43. Since there are variations in user manipulation and situations, there will be variations in the time at which the data corresponding to each process operation appears and in the chronological length of the data. Therefore, if the time from the start of the series of operations is used as it is for the process operation data, as shown in FIG. 4, the clustering may be significantly affected. Since variations in the time of operation are cumulative to subsequent processes, the later the operation process, the more susceptible it becomes.

In this regard, in this modification example, the progress degree is used instead of time. By using the progress degree as the criterion, the work data can be expanded or contracted in the direction of the time axis, and machine learning of the process operation data can be performed with the time-series lengths aligned as shown in the lower part of FIG. 12. This makes it easier, in the clustering of machine learning, for process operation data that indicate similar process operations to each other to form identical cluster. Thus, it can be expected that the trained model 43 will make more appropriate inferences.

The progress degree can also be determined in such a way that it is not affected by variations in the time length of the work processes included in the series of operations. Specifically, some work processes may take a long time under certain circumstances, for example, pressing a workpiece onto another component. When the series of operations processes includes multiple work processes that are prone to a large variation in time to completion, if a progression degree from 0 to 1 is simply assigned to the entire series of operations processes, it may be difficult for the progress degree of the work data to match each other even if the same series of operations processes are performed.

To solve this situation, the following can be applied. That is, the work processes that are expected to be included in the series of operations are roughly classified in advance, and each classification is assigned a label, for example, 0, 1, 2, ..., in accordance with the operation order. The above pre-classification can be done based on the work state or by machine learning such as clustering. For the work labeled 1, the progress degree is assigned from 0.0 to 1.0, for the work labeled 2, the progress degree is assigned from 1.0 to 2.0, ... and so on. This realizes that even when comparing the progress of data with large variations in the time length of work processes, the same work process will show similar progress. Thus, it is easier for the trained model 43 to make appropriate inferences.

As explained above, the robot control device 15 in this embodiment includes the trained model 43, the operation switcher 30, the progress degree calculator 46, and the display 22. The trained model 43 is constructed by being trained on the work data in which the state value is input data and the corresponding user operation force is output data, when the human manipulates the robot 10 so that it performs the series of operations. The operation switcher 30 acquires the control data for the robot 10 to make it perform the operations, by acquiring the user operation force predicted accordingly from the trained model 43 when the state values are input to the trained model 43. The progress degree calculator 46 determines the progress degree, when input data are input to the trained model 43, indicating which progress degree of the series of operations the output data accordingly output correspond. The display 22 is capable of outputting the progress degree. The trained model 43 can determine into which of the plurality of process operations, resulting from a division of the series of operations, the input data are classified. In the trained model 43, the output transition, being a temporal transition of the user operation force so that the process operation is realized, is defined in association with the node each of which represents each classification. The trained model 43 determines the user operation force corresponding to the state value of the input data from the output transition of the node associated with the classification result of the input data and makes the output the output data. The changing range of the progress degree (from 0 to 1) is divided into a plurality of progress degree ranges to correspond to the plurality of process operations. The order of the plurality of progress degree ranges corresponds to the order of the plurality of the process operations in the series of operations. The progress degree acquired by the progress degree calculator 46 varies depending on an ordinal number of the user operation force corresponding to the state value in the output transition associated with the process operation, in the progress degree range corresponding to the process operation that is the result of the classification of the input data performed by the trained model 43.

This allows the progress degree representing the progress of the series of operations to be acquired in a manner that reflects the detailed progress within a single process operation. Thus, the user can better understand the status of the autonomous operation by referring to the progress degree.

The robot control device 15 in this embodiment includes the operation label storage part 50. The operation label including information expressing the contents of the process operation is stored in association with the process operation. The display 22 can output the operation label.

This allows the user to understand the status of the autonomous operation more intuitively.

In the example of FIG. 11, the output data in the work data include the user operation force associated with the progress degree.

This allows the variation in the temporal length of the work data to be less likely to become noise in the machine learning. Thus, the trained model 43 can make more appropriate inferences.

In this embodiment of the robot control device 15, the work data are divided into process operation data, each corresponding to one process operation. The trained model 43 is constructed by clustering for the process operation data.

This allows the construction of the trained model 43 that can flexibly respond to various situations.

The robot system 1 in this embodiment includes the robot control device 15 and the robot 10.

This allows the user to monitor the progress of the operations of the robot 10 when it operates autonomously, in a manner that reflects the more detailed situation.

While some preferred embodiments of the present invention have been described above, the foregoing configurations may be modified, for example, as follows.

In the above embodiment, the trained model 43 learns the relationship between the state values and the user operation force. Alternatively, the trained model 43 can be configured to learn the relationship between the state values and the operation command to the robot 10.

The division of the work data into the process operation data may be performed automatically using a plurality of base trained models. Specifically, each base trained model is built in advance for each standard process operation. A standard process operation is an operation that is simpler than a series of operations, and may include lowering, rubbing, and lowering-in-hole operation described above. Each base trained model learns the chronological sequence of the state values and the user operation force when the user manipulates the operation part 21 to cause the robot 10 to perform the standard process operation. When the work data are acquired, the state values in the work data are input to the respective base trained models, and the user operation force output by the base trained models is compared with the user operation force in the work data. If there is an interval in the time series of inputs and outputs of the work data that is similar to the time series of inputs and outputs of the base trained model, it can be determined that this part is the process operation.

Instead of displaying the progress degree in a graph format as shown in FIG. 8, the progress degree can be configured to be displayed numerically, for example.

The robot control device 15 may be equipped with an audio output part instead of or in addition to the display 22, as an information output part. In this case, the progress degree can be output by sound. For example, the robot control device 15 can be configured to read out the numerical value of the progress degree by speech synthesis. Similarly, the operation labels may be output by voice.

The operation label can be a sign that identifies the contents of the operation. Instead of being a string of characters such as "pull out", etc., the operation label can be an image such as an icon, for example.

Instead of the machine learning model by clustering, other forms of machine learning models, such as a neural network, can be used as the trained model 43.

Sensors other than the motion sensor 11, the force sensor 12, and the camera 13 may be used as sensors (state sensors) to acquire the state of the robot 10 and its surroundings.

An operation position detection sensor may be provided in the operation part 21 instead of or in addition to the operation force detection sensor. Like the operation force detection sensor, the operation position detection sensor can also be considered as a sensor that detects human manipulation.

The robot system 1 may be a robot system where the operation part 21 is a master arm used for remote control and the robot 10 is a slave arm. In this case, the AI part 40 can construct a trained model 43 that is learned based on the manipulation of the master arm by the user.

The functions of each element may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. In the present disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

From the above described embodiments and modifications thereof, at least the following technical ideas can be ascertained.

(Item 1) A robot control device comprising:
a trained model constructed by being trained on work data when a human manipulates a robot so that the robot performs a series of operations, the work data including input data and output data, the input data being a state of the robot and its surroundings, the output data being corresponding human manipulation or the operation of the robot by the human manipulation;
a control data acquirer acquiring control data of the robot to make the robot perform the operations, when the input data concerning the state of the robot and its surroundings are input to the trained model, by acquiring the output data concerning the human manipulation or the operation of the robot predicted accordingly from the trained model;
a progress degree acquirer acquiring a progress degree, when the input data are input to the trained model and the trained model outputs the corresponding output data, indicating to which degree of progress of the series of operations the output data correspond; and
an information output part being capable of outputting the progress degree, wherein
the trained model can determine into which of a plurality of process operations, resulting from a division of the series of operations, the input data are classified,
in the trained model, an output transition, being a temporal transition of the human manipulation so that the process operation is realized or the operation of the robot by the human manipulation, is defined in association with each classification,
the trained model determines output corresponding to the input data from the output transition associated with the classification result of the input data and makes the output the output data,
a changing range of the progress degree is divided into a plurality of progress degree ranges to correspond to the plurality of the process operations,
an order of the plurality of progress degree ranges corresponds to an order of the plurality of the process operations in the series of operations, and
the progress degree acquired by the progress degree acquirer varies depending on an ordinal number of output corresponding to the input data in the output transition associated with the process operation, in the progress degree range corresponding to the process operation that is a result of the classification of the input data performed by the trained model.

(item 2) The robot control device of item 1, comprising
an operation label storage part stores an operation label including information expressing a content of the process operation associated with the process operation, wherein
the information output part can output the operation label.

(Item 3) The robot control device according to item 1 or 2, wherein
in the work data, the output data include, associating with the progress degree, the human manipulation or the operation of the robot by the human manipulation.

(Item 4) The robot control device according to any of items 1 to 3, wherein
the work data are divided into process operation data, each corresponding to one process operation, and
the trained model is constructed by clustering for the process operation data.

(item 5) A robot system comprising:
the robot control device according to any of items 1 to 4; and
the robot.

(item 6) A robot control method comprising:
constructing a trained model by training on work data when a human manipulates a robot so that the robot performs a series of operations, the work data including input data and output data, the input data being a state of the robot and its surroundings, the output data being corresponding human manipulation or the operation of the robot by the human manipulation;
acquiring control data of the robot to make the robot perform the operations, when the input data concerning the state of the robot and its surroundings are input to the trained model, by acquiring the output data concerning the human manipulation or the operation of the robot predicted accordingly from the trained model;
acquiring a progress degree, when the input data are input to the trained model and the trained model outputs the corresponding output data, indicating to which degree of progress of the series of operations the output data correspond; and
outputting the progress degree, wherein
the trained model can determine into which of a plurality of process operations, resulting from a division of the series of operations, the input data are classified,
in the trained model, an output transition, being a temporal transition of the human manipulation so that the process operation is realized or the operation of the robot by the human manipulation, is defined in association with each classification,
the trained model determines output corresponding to the input data from the output transition associated with the classification result of the input data and makes the output the output data,
a changing range of the progress degree is divided into a plurality of progress degree ranges to correspond to the plurality of the process operations,
an order of the plurality of progress degree ranges corresponds to an order of the plurality of the process operations in the series of operations, and
the progress degree acquired by the progress degree acquirer varies depending on an ordinal number of output corresponding to the input data in the output transition associated with the process operation, in the progress degree range corresponding to the process operation that is a result of the classification of the input data performed by the trained model.

## Claims

1. A robot control device comprising:
a trained model constructed by being trained on work data when a human manipulates a robot so that the robot performs a series of operations, the work data including input data and output data, the input data being a state of the robot and its surroundings, the output data being corresponding human manipulation or the operation of the robot by the human manipulation;
a control data acquirer acquiring control data of the robot to make the robot perform the operations, when the input data concerning the state of the robot and its surroundings are input to the trained model, by acquiring the output data concerning the human manipulation or the operation of the robot predicted accordingly from the trained model;
a progress degree acquirer acquiring a progress degree, when the input data are input to the trained model and the trained model outputs the corresponding output data, indicating to which degree of progress of the series of operations the output data correspond; and
an information output part being capable of outputting the progress degree, wherein
the trained model can determine into which of a plurality of process operations, resulting from a division of the series of operations, the input data are classified,
in the trained model, an output transition, being a temporal transition of the human manipulation so that the process operation is realized or the operation of the robot by the human manipulation, is defined in association with each classification,
the trained model determines output corresponding to the input data from the output transition associated with the classification result of the input data and makes the output the output data,
a changing range of the progress degree is divided into a plurality of progress degree ranges to correspond to the plurality of the process operations,
an order of the plurality of progress degree ranges corresponds to an order of the plurality of the process operations in the series of operations, and
the progress degree acquired by the progress degree acquirer varies depending on an ordinal number of output corresponding to the input data in the output transition associated with the process operation, in the progress degree range corresponding to the process operation that is a result of the classification of the input data performed by the trained model.

2. The robot control device according to claim 1, comprising
an operation label storage part stores an operation label including information expressing a content of the process operation associated with the process operation, wherein
the information output part can output the operation label.

3. The robot control device according to claim 1, wherein
in the work data, the output data include, associating with the progress degree, the human manipulation or the operation of the robot by the human manipulation.

4. The robot control device according to claim 1, wherein
the work data are divided into process operation data, each corresponding to one process operation, and
the trained model is constructed by clustering for the process operation data.

5. A robot system comprising:
the robot control device according to claim 1; and
the robot.

6. A robot control method comprising:
constructing a trained model by training on work data when a human manipulates a robot so that the robot performs a series of operations, the work data including input data and output data, the input data being a state of the robot and its surroundings, the output data being corresponding human manipulation or the operation of the robot by the human manipulation;
acquiring control data of the robot to make the robot perform the operations, when the input data concerning the state of the robot and its surroundings are input to the trained model, by acquiring the output data concerning the human manipulation or the operation of the robot predicted accordingly from the trained model;
acquiring a progress degree, when the input data are input to the trained model and the trained model outputs the corresponding output data, indicating to which degree of progress of the series of operations the output data correspond; and
outputting the progress degree, wherein
the trained model can determine into which of a plurality of process operations, resulting from a division of the series of operations, the input data are classified,
in the trained model, an output transition, being a temporal transition of the human manipulation so that the process operation is realized or the operation of the robot by the human manipulation, is defined in association with each classification,
the trained model determines output corresponding to the input data from the output transition associated with the classification result of the input data and makes the output the output data,
a changing range of the progress degree is divided into a plurality of progress degree ranges to correspond to the plurality of the process operations,
an order of the plurality of progress degree ranges corresponds to an order of the plurality of the process operations in the series of operations, and
the progress degree acquired by the progress degree acquirer varies depending on an ordinal number of output corresponding to the input data in the output transition associated with the process operation, in the progress degree range corresponding to the process operation that is a result of the classification of the input data performed by the trained model.
